# EUROPEAN PATENT APPLICATION

(11) **EP 4 768 443 A1**
(43) Date of publication of application: **01.07.2026**
(21) Application number: 25221036.4
(22) Date of filing: 05.12.2025
(51) Int. Cl.: C01G 53/50

(54) **METHOD FOR PRODUCING PRECURSOR OF POSITIVE ELECTRODE ACTIVE MATERIAL**

(30) Priority: 16.12.2024 JP 2024219609
(71) Applicant: Prime Planet Energy & Solutions, Inc., Chuo-ku, Tokyo 103-0022 (JP); The University of Tokyo, Bunkyo-ku, Tokyo 113-8654 (JP)
(72) Inventor: SUZUKI, Shinya, Tokyo,, 103-0022 (JP); OUCHI, Takanari, Tokyo, 113-8654 (JP)
(74) Representative: Kuhnen & Wacker Patent- und Rechtsanwaltsbüro PartG mbB

(57) **Abstract**

The present disclosure provides a method for producing a precursor of a positive electrode active material that makes it possible to decrease waste generation. The method for producing a precursor of a positive electrode active material according to the present disclosure, includes: a step of bringing a raw material containing Ni and Co into contact with an aqueous phase containing ammonia and ammonium sulfate to leach Ni and Co into the aqueous phase; a step of removing and recovering ammonia from the aqueous phase; a step of dissolving a manganese salt in the aqueous phase from which ammonia has been removed; and a step of obtaining a carbonate salt containing Ni, Co, and Mn by crystallization with ammonium bicarbonate from the aqueous phase in which the manganese salt has been dissolved.

## Description

### BACKGROUND OF THE DISCLOSURE

### 1. Field

The present disclosure relates to a method for producing a precursor of a positive electrode active material.

### 2. Background

Lithium ion secondary batteries are widely used in various fields such as power sources for vehicle drive or portable power sources. In recent years, the material recycling of used lithium ion secondary batteries has been promoted from the viewpoint of SDGs. For the material recycling, technologies have been developed, in which metal elements contained in positive electrode active materials are separated from used lithium ion secondary batteries and reused for producing positive electrode active materials.

When producing positive electrode active materials for lithium ion secondary batteries, typically, hydroxides containing metal elements other than Li (e.g. Ni, Co, and Mn in a case of lithium-nickel-cobalt-manganese composite oxides) are first prepared as precursors using a crystallization method (e.g., see Patent Literature 1).

### Citation List

Patent Literature 1: WO2018/123995

### SUMMARY

In the prior art, sulfates are frequently used as metal element sources other than Li in producing precursors, as described in Patent Literature 1. Furthermore, in producing precursors, sodium hydroxide is generally used for adjusting pH. As a result, the prior art has had a problem that sodium sulfate, which is a waste, is produced as a by-product in producing the precursors.

Thus, an object of the present disclosure is to provide a method for producing a precursor of a positive electrode active material that makes it possible to decrease waste generation.

The method for producing a precursor of a positive electrode active material according to the present disclosure includes: a step of bringing a raw material containing Ni and Co into contact with an aqueous phase containing ammonia and ammonium sulfate to leach Ni and Co into the aqueous phase; a step of removing and recovering ammonia from the aqueous phase; a step of dissolving a manganese salt in the aqueous phase from which ammonia has been removed; and a step of obtaining a carbonate salt containing Ni, Co, and Mn by crystallization with ammonium bicarbonate from the aqueous phase in which the manganese salt has been dissolved.

According to this configuration, a precursor of a positive electrode active material can be produced while decreasing waste generation.

### BRIEF DESCRIPTION OF THE DRAWINGS

FIG. 1 is a flowchart of each step of a method for producing a precursor of a positive electrode active material according to the present disclosure; and
FIG. 2 is a schematic diagram showing operations and reagents in the method for producing the precursor of the positive electrode active material according to the present disclosure.

### DETAILED DESCRIPTION OF THE EMBODIMENTS

The embodiments of the present disclosure will be explained below with reference to the drawings. It should be noted that matters not mentioned herein but necessary for performing the present disclosure may be understood as design matters by those skilled in the art based on the prior art in the field. The present disclosure may be performed based on the content disclosed herein and the common technical knowledge in the field. It should be noted that a numerical range expressed as "A to B" herein includes both A and B.

It should be noted that a "secondary battery" herein refers to a power storage device capable of being repeatedly charged and discharged. A "lithium ion secondary battery" herein refers to a secondary battery that uses lithium ions as charge carriers and performs charge and discharge by movement of charges accompanying lithium ions between positive and negative electrodes.

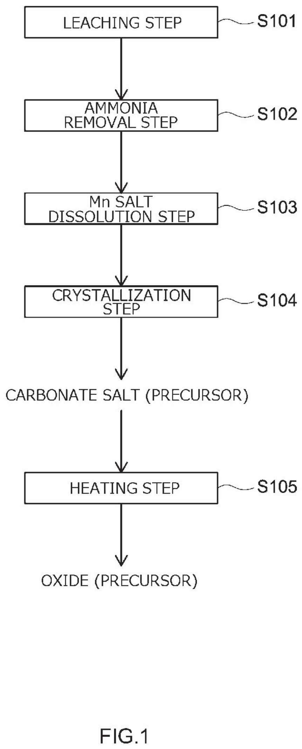

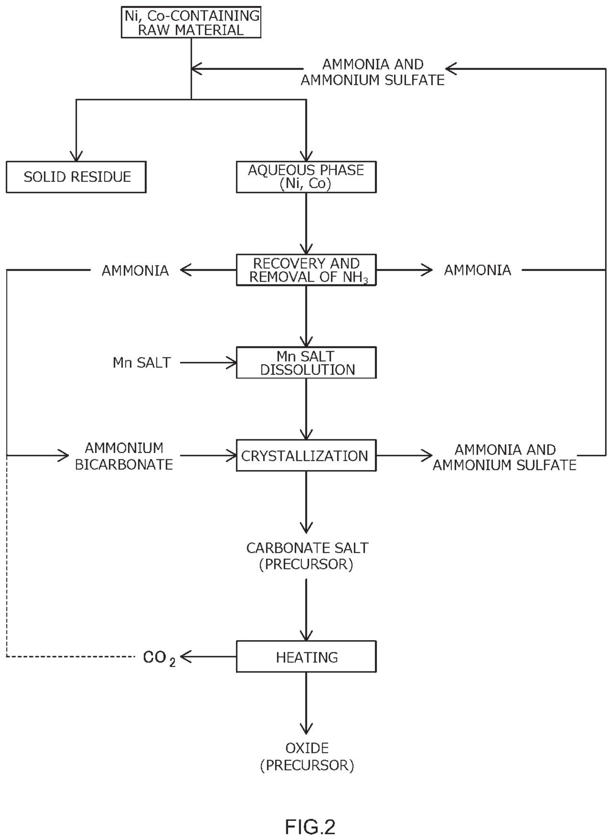

FIG. 1 shows essential steps and an optional step of the method for producing the precursor of the positive electrode active material according to the present disclosure. The method for producing the precursor of the positive electrode active material according to the present disclosure includes, as essential steps: step S101 of bringing a raw material containing Ni and Co into contact with an aqueous phase containing ammonia and ammonium sulfate to leach Ni and Co into the aqueous phase (hereinafter, also referred to as "leaching step"; step S102 of removing and recovering ammonia from the aqueous phase (hereinafter, also referred to as "ammonia removal step"); step S103 of dissolving a manganese salt in the aqueous phase from which ammonia has been removed (hereinafter, also referred to as "Mn salt dissolution step"); and step S104 of obtaining a carbonate salt containing Ni, Co, and Mn by crystallization with ammonium bicarbonate from the aqueous phase in which the manganese salt has been dissolved (hereinafter, also referred to as "crystallization step"). The method for producing the precursor of the positive electrode active material according to the present disclosure may further include, as an optional step: step S105 of heating the carbonate salt containing Ni, Co, and Mn to obtain an oxide containing Ni, Co, and Mn (hereinafter, also referred to as "heating step"). FIG. 2 is a schematic diagram showing operations and reagents in the method for producing the precursor of the positive electrode active material according to the present disclosure. Each step will be explained below in detail.

### <Leaching Step S101>

The type of the raw material containing Ni and Co is not particularly limited as long as it contains Ni and Co. The raw material containing Ni and Co may be a single compound containing Ni and Co, or a mixture of two or more compounds.

When the raw material is a mixture, the mixture contains, for example, at least a compound containing Ni and a compound containing Co. For example, the mixture contains at least a compound containing both Ni and Co and a compound containing either Ni or Co. The mixture may further contain a compound that does not contain Ni or Co.

Examples of the raw material containing Ni and Co include an ore containing Ni and Co (particularly oxide ore), an inorganic compound containing Ni and Co (particularly inorganic oxide), and a battery waste containing Ni and Co. From the viewpoint of the material recycling, it is advantageous to use battery waste containing Ni and Co as a raw material.

Specific examples of the battery waste include a black mass of used lithium ion secondary batteries (particularly black mass obtained by crushing and roasting used lithium ion secondary batteries), a positive electrode waste taken from used lithium ion secondary batteries, an electrode body waste taken from used lithium ion secondary batteries, a positive electrode waste judged as a defective product, an electrode body waste judged as a defective product, and a positive electrode active material judged as a defective product. When a lithium-nickel-cobalt-manganese composite oxide, a lithium-nickel-cobalt-aluminum composite oxide, or the like is used for the positive electrode active material in these battery wastes, the battery wastes contain Ni and Co.

It is more desirable that the raw material contains Ni and Co as metals. From this viewpoint, when the raw material is a waste, it is desirable that the waste has undergone reduction roasting. The waste is desirably a black mass obtained by crushing and roasting used lithium ion secondary batteries.

Specifically, the above-described black mass can be obtained , for example, by a process in which lithium ion secondary batteries are crushed according to a known method, then, as necessary, sieved, and roasted at 400°C to 1500°C (desirably 700°C to 1000°C) under an atmosphere with an oxygen concentration of 5 vol% or less (desirably 1 vol% or less) (particularly, under an atmosphere of an inert gas such as argon gas and nitrogen gas) for 1 to 24 hours (desirably 4 to 12 hours).

The raw material may further contain elements other than Ni and Co. For example, the raw material may further contain Mn. When the raw material is a battery waste, Mn may originate from a lithium-nickel-cobalt-manganese composite oxide as a positive electrode active material. For example, the raw material may further contain Li. When the raw material is a battery waste, Li may originate from a positive electrode active material, a supporting salt, or the like. The raw material may further contain Al. When the raw material is a battery waste, Al may originate from a lithium-nickel-cobalt-aluminum composite oxide as a positive electrode active material, a positive electrode current collector, an electrode terminal, a battery case, or the like. The raw material may further contain Cu. When the raw material is a battery waste, Cu may originate from a negative electrode current collector, an electrode terminal, or the like. When the raw material is a battery waste, it is desirable that the battery waste does not contain at least one of Cu and Li, and it is more desirable that it does not contain both Cu and Li. Thus, the battery waste may undergo some processing such as removal of at least one of Cu and Li.

In leaching step S101, an aqueous phase (i.e. aqueous solution) containing ammonia and ammonium sulfate is used as the leaching agent. Leaching with such an aqueous phase allows Ni and Co to leach from the raw material containing Ni and Co into the aqueous phase.

The ammonia concentration in the aqueous phase is not particularly limited, but the higher the concentration is, the higher the leachability is. Thus, the ammonia concentration in the aqueous phase is, for example, 1 mass% or more, desirably 5 mass% or more, more desirably 10 mass% or more, even more desirably 15 mass% or more. Furthermore, the upper limit of the ammonia concentration is a saturation concentration of ammonia in water, which is about 35 mass%. From the viewpoint of leachability and handleability, the ammonia concentration is particularly desirably 15 mass% to 25 mass%.

Ammonium sulfate serves as a pH adjuster. An amount of ammonium sulfate in the aqueous phase is an amount in which a pH of the ammonia leachate is, for example, 9 to 12, desirably 10 to 11 at 20°C. The concentration of ammonium sulfate in the aqueous phase is desirably 0.5 mol/L or more, more desirably 1 mol/L or more, even more desirably 2 mol/L or more. On the other hand, the concentration of ammonium sulfate in the aqueous phase may be 3 mol/L or less or 2.5 mol/L or less.

The aqueous phase may consist only of water, ammonia, and ammonium sulfate. The aqueous phase may further contain a component other than water, ammonia, and ammonium sulfate in an amount within such a range that the effects of the present disclosure are not inhibited (e.g. at a concentration of less than 10 mass%, 5 mass% or less, or 1 mass% or less).

The amount of the aqueous phase is not particularly limited and may be the same as or similar to an amount of an aqueous phase in a known ammonia leaching method. For example, the amount of the aqueous phase is an amount sufficient to completely immerse the raw material containing Ni and Co.

For example, leaching step S101 may be performed as follows. First, a container is prepared. The container may be a known container used for ammonia leaching. As necessary, the container may be equipped with heating means such as a heater, temperature measurement means such as a thermometer and a temperature sensor, and stirring means such as a stirring blade and a magnetic stir bar.

The raw material and aqueous phase are introduced into the container. The order of introduction is not particularly limited, and any one of them may be first introduced, or both of them may be simultaneously introduced. Thereby, the raw material and the aqueous phase can be brought into contact with each other to enable ammonia leaching.

The leaching temperature in leaching step S101 is not particularly limited and may be room temperature (i.e. 1°C to 30°C). The leaching may also be performed under heating. From the viewpoint of achieving a high leaching speed, the leaching temperature is desirably 50°C or higher, more desirably 55°C or higher, even more desirably 60°C or higher, particularly desirably 80°C or higher. The leaching temperature may be below the boiling point of water, for example, 90°C or lower, 85°C or lower, or 80°C or lower.

Desirably, stirring is performed during the leaching. The stirring speed is not particularly limited but is desirably 200 rpm or higher, more desirably 300 rpm or higher, even more desirably 400 rpm or higher. The stirring speed may be 2000 rpm or lower, 1000 rpm or lower, or 800 rpm or lower.

The leaching time is not particularly limited and can be determined as appropriate depending on the leaching temperature, the stirring speed, and the like. The leaching time is, for example, 1 hour or longer, desirably 2 hours or longer, more desirably 3 hours or longer. From the viewpoint of workability, the leaching time is, for example, 48 hours or shorter, desirably 24 hours or shorter, more desirably 12 hours or shorter, even more desirably 6 hours or shorter.

The leaching can be terminated by solid-liquid separation such as filtration. In this manner, Ni and Co can be leached into the aqueous phase to obtain an aqueous phase containing Ni and Co. On the other hand, a solid residue can be obtained. When the raw material contains metal elements other than Ni and Co, the solid residue may contain metal elements other than Ni and Co.

It should be noted that the Ni and Co leaching operation may be performed once or multiple times. Multiple leaching operations makes it possible to recover more Ni and Co. When the leaching operation is performed multiple times, the solid residue obtained by solid-liquid separation after leaching may be subjected to leaching using an aqueous phase containing ammonia and ammonium sulfate. This aqueous phase may be a freshly-prepared solution or a solution that has been once used for leaching.

### [Ammonia Removal Step S102]

In ammonia removal step S102, ammonia is removed from the aqueous phase obtained in leaching step S101 and containing Ni and Co. At this time, removed ammonia is recovered.

Ammonia removal step S102 can be performed according to a known method. Specifically, for example, the step can be performed as follows. An open container (i.e. a container that is not sealed and is opened to the atmosphere) is prepared. This open container may be a known type. The open container is equipped with heating means such as a heater, temperature measurement means such as a thermometer and a temperature sensor, and stirring means such as a stirring blade and a magnetic stir bar.

On the other hand, an ammonia collector is prepared. A known ammonia collector may be used. For example, the ammonia collector includes a suction hood and an ammonia collection section. The suction hood may be disposed, for example, above the open container. In the ammonia collection section, for example, a sucked ammonia gas is cooled and recovered in a form of ammonia water. Alternatively, for example, the ammonia collection section contains an ammonia collection liquid (e.g. an acidic aqueous solution at below pH 7, particularly a sulfuric acid solution at below pH 7) and is configured such that a gas sucked from the suction hood can pass through the ammonia collection liquid. The ammonia collector may include an ammonia separation section and an ammonia recovery section. The ammonia separation section is configured to separate ammonia from the collection liquid by distillation, adsorption using an adsorbent, membrane separation, or the like. The ammonia recovery section is in a form of a tank or the like connected to the ammonia separation section via piping or the like, configured to recover ammonia separated in the ammonia separation section. It should be noted that the configuration of the ammonia collector is not limited to the above description.

The aqueous phase that has undergone leaching step S101 is added to the open container and heated. Thereby, ammonia can be volatilized from the aqueous phase. The heating temperature is not particularly limited as long as ammonia volatilizes, but is desirably 50°C or higher, more desirably 70°C or higher, even more desirably 90°C or higher. On the other hand, the heating temperature may be below the boiling point of water (i.e. 100°C).

The heating time can be determined as appropriate depending on the heating temperature. The higher the heating temperature is, the shorter the heating time can be set. The heating time is, for example, 1 hour or longer, desirably 3 hours or longer, more desirably 6 hours or longer, even more desirably 9 hours or longer. The heating time is desirably 72 hours or shorter, more desirably 48 hours or shorter, even more desirably 24 hours or shorter.

Stirring may be performed during heating. The stirring speed is not particularly limited, but is desirably 200 rpm or higher, more desirably 400 rpm or higher, even more desirably 600 rpm or higher. The stirring speed may be 2000 rpm or lower, 1000 rpm or lower, or 800 rpm or lower.

Ammonia volatilized by heating is recovered using the ammonia collector. Specifically, for example, ammonia volatilized is sucked from the suction hood and captured in the collection liquid of the ammonia collection section. In this manner, ammonia removal step S102 can be performed. As shown in FIG. 2, ammonia collected in ammonia removal step S102 can be reused for the aqueous phase used in leaching step S101. Thus, from the viewpoint of further decreasing waste, it is desirable that, in the production method according to the present disclosure, ammonia recovered in ammonia removal step S102 is reused in leaching step S101. Alternatively, ammonia recovered in ammonia removal step S102 can be converted into ammonium bicarbonate and reused in crystallization step S104 described later. Ammonia can be converted into ammonium bicarbonate according to a known method.

It should be noted that, the more the volatilization amount of ammonia is, the lower the pH of the aqueous phase becomes, improving the precipitation ratio of a carbonate salt in crystallization step S104. Thus, ammonia removal step S102 is continued until the pH of the aqueous phase reaches desirably 9.0 or lower, more desirably below 8.0, even more desirably below 7.5, particularly desirably below 7.0.

### <Mn Salt Dissolution Step S103>

In Mn salt dissolution step S103, a manganese salt is dissolved in the aqueous phase from which ammonia has been removed in ammonia removal step S102.

Since the manganese salt is dissolved in the aqueous phase, a water-soluble manganese salt is used. Examples of the manganese salt include manganese sulfate, manganese nitrate, and manganese chloride, and, above all, manganese sulfate is desirable. When manganese sulfate is used as the manganese salt, the resulting aqueous phase contains sulfate ions. The sulfate ions can be recovered in a form of ammonium sulfate after crystallization step S104. This ammonium sulfate can be reused in leaching step S101. Consequently, when manganese sulfate is used as a manganese salt, waste cannot be generated in the method for producing the precursor of the positive electrode active material according to the present disclosure.

It should be noted that when the raw material containing Ni and Co further contains Mn, the solid residue obtained in leaching step S101 contains Mn. Mn contained in this solid residue can be recovered and regenerated as a manganese salt. Thus, from the viewpoint of resource circulation, it is advantageous that the raw material containing Ni and Co further contains Mn, and the manganese salt used in Mn salt dissolution step S103 is prepared by reusing Mn contained in the solid residue obtained in leaching step S101. Thus, it is desirable that Mn in the manganese salt is Mn recovered from the solid residue generated in leaching step S101.

The amount of the manganese salt may be selected as appropriate depending on a desired molar ratio of Ni, Co, and Mn in the positive electrode active material. That is, the amount of the manganese salt may be adjusted such that the molar ratio of Ni, Co, and Mn contained in the aqueous phase is equivalent to the desired molar ratio of Ni, Co, and Mn in the positive electrode active material.

The manganese salt in a solid form may be directly added to the aqueous phase. Alternatively, it is possible to employ a process in which the manganese salt is dissolved in water and then the resulting manganese salt aqueous solution is added to the aqueous phase. The manganese salt may be dissolved in the aqueous phase by heating, stirring, or the like.

In this manner, Mn salt dissolution step S103 can be performed to obtain an aqueous phase containing Ni, Co, and Mn.

### <Crystallization Step S104>

In crystallization step S104, crystallization is performed using ammonium bicarbonate. Specifically, a crystallization reaction is caused by adding ammonium bicarbonate to the aqueous phase, to precipitate a carbonate salt containing Ni, Co, and Mn.

Ammonium bicarbonate functionally serves as an ammonium donor for the crystallization reaction, a pH adjuster for the crystallization reaction, and a carbonate source for the carbonate salt. By adding ammonium bicarbonate to the aqueous phase, a crystallization reaction is caused to precipitate the carbonate salt containing Ni, Co, and Mn. Since the crystallization reaction can be easily controlled, it is desirable that ammonium bicarbonate in a form of an aqueous solution is added dropwise into the aqueous phase.

The amount of ammonium bicarbonate is, in terms of molar amount, desirably no less than 1.5 time, more desirably no less than 2.0 times, even more desirably no less than 2.5 times the total molar number of Ni, Co, and Mn contained in the aqueous phase. The amount of ammonium bicarbonate may be, in terms of molar amount, no more than 10 times, no more than 5 times, or no more than 3 times the total molar number of Ni, Co, and Mn contained in the aqueous phase.

The crystallization may be performed at room temperature (i.e. 1°C to 30°C) or under heating. When the crystallization is performed under heating, the heating temperature is desirably below the decomposition temperature of the obtained carbonate salt. Specifically, the heating temperature is desirably 70°C or lower (particularly 40°C to 70°C). From the viewpoint of energy saving, it is desirable that the crystallization is performed at room temperature (i.e. 1°C to 30°C).

Desirably, stirring is performed during the crystallization. The stirring speed is not particularly limited but is desirably 200 rpm or higher, more desirably 400 rpm or higher, even more desirably 600 rpm or higher. The stirring speed may be 2000 rpm or lower, 1000 rpm or lower, or 800 rpm or lower.

The crystallization time is not particularly limited and can be determined as appropriate depending on the crystallization temperature, the stirring speed, and the like. The crystallization time is, for example, 10 minutes or longer, desirably 1 hour or longer, more desirably 2 hours or longer. From the viewpoint of operation efficiency, the crystallization time is, for example, 48 hours or shorter, desirably 24 hours or shorter, more desirably 12 hours or shorter, even more desirably 6 hours or shorter.

The crystallization makes it possible to precipitate the carbonate salt containing Ni, Co, and Mn. The precipitated carbonate salt containing Ni, Co, and Mn can be recovered according to a known method. For example, the precipitated carbonate salt containing Ni, Co, and Mn can be separated from the aqueous phase by solid-liquid separation such as filtration, then washed with water, and dried to collect the carbonate salt containing Ni, Co, and Mn.

On the other hand, the aqueous phase separated from the carbonate salt contains ammonia and ammonium sulfate, originating from ammonia and ammonium sulfate used in leaching step S101 and ammonium bicarbonate used in crystallization step S104. This ammonia and ammonium sulfate can be reused in leaching step S101 (see FIG. 2). Particularly, the aqueous phase separated from the carbonate salt may contain residual Ni, residual Co, and carbonate ions, but these components do not adversely affect implementation of leaching step S101. Accordingly, the aqueous phase separated from the carbonate salt after crystallization step S104 can be directly used for leaching step S101. On the other hand, ammonia and ammonium sulfate may be reused after separated from the aqueous phase.

Thus, it is desirable that ammonia and ammonium sulfate contained in the aqueous phase after crystallization step S104 are reused in leaching step S101.

As described above, in the method for producing a precursor of a positive electrode active material according to the present disclosure, ammonia and ammonium sulfate are produced as by-products during the crystallization. Since ammonia and ammonium sulfate can be reused in leaching step S101, the waste can be considerably decreased and even eliminated. Consequently, the method for producing a precursor of a positive electrode active material according to the present disclosure is excellent in resource circulation. Furthermore, since a black mass derived from used lithium ion secondary batteries can be used as a raw material, the method according to the present disclosure is significantly useful for the material recycling.

Besides hydroxides, carbonates are also known as positive electrode active material precursors. By performing crystallization step S104, the carbonate salts containing Ni, Co, and Mn, which are the precursor of the positive electrode active material, can be obtained. Consequently, the carbonate salt containing Ni, Co, and Mn can be used for producing the positive electrode active material.

On the other hand, an oxide containing Ni, Co, and Mn can also be used as the precursor of the positive electrode active material. Thus, in the method for producing the precursor of the positive electrode active material according to the present disclosure, heating step S105 may be additionally carried out.

### <Heating Step S105>

In heating step S105, the carbonate salt containing Ni, Co, and Mn is heated so as to be converted into an oxide containing Ni, Co, and Mn.

For heating in heating step S105, a known electric furnace or the like may be used. The heating temperature is desirably 300°C or higher and 1000°C or lower. The heating time is desirably 1 hour or longer, more desirably 1 hour or longer and 48 hours or shorter, even more desirably 5 hours or longer and 24 hours or shorter. The heating may be performed in the air.

By this heating, the carbonate salt is converted into an oxide, and accordingly carbon dioxide is generated. When carbon dioxide is recovered and used with ammonia recovered in ammonia removal step S102 to synthesize ammonium bicarbonate as shown in FIG. 2, this ammonium bicarbonate can be reused for crystallization step S104. This process is advantageous from the viewpoint of resource circulation. The recovery of carbon dioxide and the synthesis of ammonium bicarbonate can be performed according to a known method.

In this manner, the oxide containing Ni, Co, and Mn, which is the precursor of the positive electrode active material, can be obtained. Accordingly, the oxide containing Ni, Co, and Mn can be used for producing the positive electrode active material.

The positive electrode active material can be prepared using the precursor (i.e. the carbonate or oxide containing Ni, Co, and Mn) obtained by the method for producing the precursor of the positive electrode active material according to the present disclosure as described above,.

Specifically, the positive electrode active material can be produced by a method including: step S201 of obtaining a precursor by the above-described method for producing the precursor of the positive electrode active material according to the present disclosure (hereinafter, also referred to as "precursor preparation step"); step S202 of mixing the precursor with a lithium compound to obtain a mixture (hereinafter, also referred to as "mixing step"); and step S203 of firing the mixture (hereinafter, also referred to as "firing step").

Precursor preparation step S201 is as explained above for the method for producing the precursor of the positive electrode active material according to the present disclosure. Thus, mixing step S202 will be explained.

The lithium compound used in mixing step S202 serves as an Li source for the positive electrode active material. As the lithium compound, for example, compounds that can be converted into oxides by firing, such as lithium carbonate, lithium nitrate, and lithium hydroxide can be used.

A mixing ratio of the lithium compound to the precursor may be determined as appropriate depending on the desired composition of the positive electrode active material. For example, in the positive electrode active material, a ratio of Li to metals other than Li (typically, the total of Ni, Co, and Mn) is desirably 0.95 to 1.15. Thus, desirably, the lithium compound and the precursor are mixed such that a molar ratio of Li contained in the lithium compound to the metals (typically, the total of Ni, Co, and Mn) contained in the precursor is 0.95 to 1.15.

When metals other than Li (also referred to as other metals) not contained in the precursor is introduced into the positive electrode active material, sources of the other metals may be mixed into the positive electrode active material according to a known method.

The lithium compound and the precursor can be mixed according to a known method. For example, the precursor and the lithium compound can be mixed using a mixing device such as a shaker mixer, a V-blender, a ribbon mixer, a Julia mixer, and a Radinger mixer. By the mixing, the mixture can be obtained.

Next, firing step S203 will be explained below. Firing step S203 can be performed according to a known method. For example, the mixture can be fired using a known electric furnace or the like. From the viewpoint of suppressing oxygen defects in the positive electrode active material, the firing atmosphere is desirably an oxidizing atmosphere. A suitable oxidizing atmosphere has an oxygen concentration of 10 vol% or higher, and may be an air atmosphere or an oxygen atmosphere (i.e. an atmosphere with an oxygen concentration higher than that of air). The firing temperature is 650°C to 1000°C, desirably 700°C to 900°C. The firing time is 3 hours to 8 hours, desirably 3.5 hours to 7.5 hours.

When the carbonate salt is used as the precursor of the positive electrode active material, the lithium compound reacts with the carbonate salt by firing to generate carbon dioxide. When this carbon dioxide is recovered and used with ammonia recovered in ammonia removal step S102 to synthesize ammonium bicarbonate, this ammonium bicarbonate can be reused in crystallization step S104. This process is advantageous from the viewpoint of resource circulation. The recovery of carbon dioxide and the synthesis of ammonium bicarbonate can be performed according to a known method.

In this manner, a positive electrode active material can be produced. The positive electrode active material can be used for a lithium ion secondary battery according to a known method.

Hereinafter, examples of the present disclosure will be explained in detail. However, the present disclosure is not intended to be limited to those described in Examples.

### [Example 1]

First, a roasted black mass of a leaching sample was prepared according to the following procedure. A positive electrode having a positive electrode active material layer containing a lithium-nickel-cobalt-manganese composite oxide (LiNi_{0.6}Co_{0.2}Mn_{0.2}O₂) and supported on an aluminum (Al) foil was crushed. The crushed positive electrode was sieved through a 500 µm mesh sieve to prepare a positive electrode powder. Furthermore, a negative electrode having a negative electrode active material layer containing graphite and supported on a copper foil was crushed. The crushed negative electrode was sieved through a 500 µm mesh sieve to prepare a negative electrode powder. The obtained positive electrode powder and negative electrode powder were mixed to obtain a black mass. The black mass was roasted under a low-oxygen atmosphere at 750°C for 6 hours to obtain a roasted black mass with most of metals reduced.

Subsequently, 28 mass% ammonia water was mixed with ammonium sulfate ((NH₄)₂SO₄) as a pH adjuster to prepare an ammonia aqueous solution (i.e. the aqueous phase).

The above-described roasted black mass was added to the above-described ammonia aqueous solution. Subsequently, the ammonia aqueous solution was stirred at 500 rpm for 3 hours while maintaining the temperature of the ammonia aqueous solution at 80°C to cause leaching. Then, solid-liquid separation was performed by filtration to obtain a leachate (i.e. aqueous phase) and a solid residue.

The obtained aqueous phase was heated at 90°C for 3 hours under stirring at 600 rpm in an open atmosphere. Thereby, ammonia was volatilized from the aqueous phase. Then, the aqueous phase was allowed to cool to room temperature. At this time, the pH of the aqueous phase was 7.8.

A saturated manganese sulfate aqueous solution was prepared. This saturated manganese sulfate aqueous solution was added to the aqueous phase and mixed. The amount of the saturated manganese sulfate aqueous solution was adjusted such that a molar ratio of Ni, Co, and Mn contained in the resulting aqueous phase was 6:2:2. At this time, absence of precipitates was visually confirmed.

A saturated ammonium bicarbonate aqueous solution was prepared. This saturated ammonium bicarbonate aqueous solution was added to the obtained aqueous phase containing Ni, Co, and Mn over a period of 2 hours while stirring at 600 rpm to cause crystallization. The amount of the saturated ammonium bicarbonate aqueous solution was 2.5 molar times the total amount of Ni, Co, and Mn. At this time, the solution became cloudy due to generation of a precipitate.

The resulting mixture was subjected to solid-liquid separation by filtration. The precipitate was washed with water until the washing liquid became transparent, and then dried to collect the precipitate.

The obtained precipitate was analyzed by a scanning electron microscopy-energy dispersive X-ray spectroscopy (SEM-EDS). As a result, Ni, Co, Mn, O, and C were detected from the precipitate. Thus, it was determined that a carbonate salt containing Ni, Co, and Mn had been formed.

### [Example 2]

A carbonate salt containing Ni, Co, and Mn was obtained in the same manner as in Example 1 except that the heating time during ammonia volatilization was changed from 3 hours to 6 hours. After ammonia volatilization, the pH of the aqueous phase was 7.1.

### [Example 3]

A carbonate salt containing Ni, Co, and Mn was obtained in the same manner as in Example 1 except that the heating time during ammonia volatilization was changed from 3 hours to 9 hours. After ammonia volatilization, the pH of the aqueous phase was 6.8.

### [Evaluation of Precipitation Ratio]

The amounts of Ni, Co, and Mn in the obtained aqueous phase containing Ni, Co, and Mn before crystallization were determined by a high-frequency inductively coupled plasma (ICP) emission spectroscopy. In each Example, the obtained precipitate was dissolved in an acid, and then each amount of Ni, Co, and Mn contained in the precipitate was determined by an ICP emission spectroscopy. A ratio of the total amount of Ni, Co, and Mn contained in the precipitate to the total amount of Ni, Co, and Mn contained in the aqueous phase before crystallization was calculated in percentage and defined as a crystallization ratio (%). The results are shown in Table 1.

### [Table 1]

**Table 1**

| | pH of aquesous phase after recovery of ammonia | Crystallization ratio (%) |
|---|---|---|
| Example 1 | 7.8 | 55 |
| Example 2 | 7.1 | 75 |
| Example 3 | 6.8 | 80 |

The above results demonstrate that the production method according to the present disclosure actually makes it possible to produce the precursor of the positive electrode active material.

The specific examples of the present disclosure have been described above in detail, but these are examples and will not limit the scope of claims. The techniques described in the scope of claims include those in which the specific examples exemplified above are variously modified and changed.

In other words, the method for producing the precursor of the positive electrode active material according to the present disclosure includes the following items [1] to [8].
[1] A method for producing a precursor of a positive electrode active material, including:
   a step of bringing a raw material containing Ni and Co into contact with an aqueous phase containing ammonia and ammonium sulfate to leach Ni and Co into the aqueous phase;
   a step of removing and recovering ammonia from the aqueous phase;
   a step of dissolving a manganese salt in the aqueous phase from which ammonia has been removed; and
   a step of obtaining a carbonate salt containing Ni, Co, and Mn by crystallization with ammonium bicarbonate from the aqueous phase in which the manganese salt has been dissolved.
[2] The method according to item [1], in which the raw material containing Ni and Co is a black mass obtained by crushing and roasting a used lithium ion secondary battery.
[3] The method according to item [1] or [2], in which the manganese salt is manganese sulfate.
[4] The method according to any one of items [1] to [3], in which
   the raw material containing Ni and Co further contains Mn, and
   Mn in the manganese salt is Mn recovered from a solid residue generated in the step of leaching Ni and Co into the aqueous phase.
[5] The method according to any one of items [1] to [4], in which the step of removing and recovering ammonia is continued until the pH of the aqueous phase reaches lower than 7.5.
[6] The method according to any one of items [1] to [5], in which ammonia recovered in the step of removing and recovering ammonia is reused in the step of leaching Ni and Co into the aqueous phase.
[7] The method according to any one of items [1] to [6], in which ammonia and ammonium sulfate contained in the aqueous phase after the step of obtaining the carbonate salt containing Ni, Co, and Mn are reused in the step of leaching Ni and Co into the aqueous phase.
[8] The method according to any one of items [1] to [7], further including a step of heating the carbonate salt containing Ni, Co, and Mn to obtain an oxide containing Ni, Co, and Mn.

## Claims

1. A method for producing a precursor of a positive electrode active material, comprising:
a step (S101) of bringing a raw material containing Ni and Co into contact with an aqueous phase containing ammonia and ammonium sulfate to leach Ni and Co into the aqueous phase;
a step (S102) of removing and recovering ammonia from the aqueous phase;
a step (S103) of dissolving a manganese salt in the aqueous phase from which ammonia has been removed; and
a step (S104) of obtaining a carbonate salt containing Ni, Co, and Mn by crystallization with ammonium bicarbonate from the aqueous phase in which the manganese salt has been dissolved.

2. The method according to claim 1, wherein the raw material containing Ni and Co is a black mass obtained by crushing and roasting a used lithium ion secondary battery.

3. The method according to claim 1, wherein the manganese salt is manganese sulfate.

4. The method according to claim 1, wherein
the raw material containing Ni and Co further contains Mn, and
Mn in the manganese salt is Mn recovered from a solid residue generated in the step (S101) of leaching Ni and Co into the aqueous phase.

5. The method according to claim 1, wherein the step (S102) of removing and recovering ammonia is continued until the pH of the aqueous phase reaches lower than 7.5.

6. The method according to claim 1, wherein ammonia recovered in the step (S102) of removing and recovering ammonia is reused in the step (S101) of leaching Ni and Co into the aqueous phase.

7. The method according to claim 1, wherein ammonia and ammonium sulfate contained in the aqueous phase after the step (S104) of obtaining the carbonate salt containing Ni, Co, and Mn are reused in the step (S101) of leaching Ni and Co into the aqueous phase.

8. The method according to claim 1, further comprising a step (S105) of heating the carbonate salt containing Ni, Co, and Mn to obtain an oxide containing Ni, Co, and Mn.
